(19) Europäisches Patentamt
European Patent Office
Office européen des brevets

(11) **EP 1 568 980 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**14.08.2013 Patentblatt 2013/33**

(51) Int Cl.:
***G01K 15/00*** *(2006.01)*

(45) Hinweis auf die Patenterteilung:
**05.07.2006 Patentblatt 2006/27**

(21) Anmeldenummer: **04004153.5**

(22) Anmeldetag: **24.02.2004**

(54) **Temperaturmessfühler**

Temperature sensor

Capteur de température

(84) Benannte Vertragsstaaten:
**AT BE BG CH CY CZ DE DK EE ES FI FR GB GR HU IE IT LI LU MC NL PT RO SE SI SK TR**

(43) Veröffentlichungstag der Anmeldung:
**31.08.2005 Patentblatt 2005/35**

(60) Teilanmeldung:
**05018737.6 / 1 619 485**

(73) Patentinhaber: **Electrovac AG**
**3400 Klosterneuburg (AT)**

(72) Erfinder:
• **Reiter, Werner**
**1030 Wien (AT)**

• **Marx, Christian**
**3435 Zwentendorf (AT)**

(74) Vertreter: **Graf Glück Kritzenberger**
**Hermann-Köhl-Strasse 2a**
**93049 Regensburg (DE)**

(56) Entgegenhaltungen:

| | |
|---|---|
| EP-A- 0 437 356 | EP-A- 0 806 886 |
| EP-A- 0 823 620 | EP-A2- 0 437 356 |
| WO-A-03/007660 | DE-A- 19 925 367 |
| GB-A- 1 415 644 | GB-A- 2 006 521 |
| GB-A- 2 095 834 | GB-A- 2 103 910 |
| US-A- 4 371 861 | US-A- 4 708 769 |
| US-A- 5 430 428 | US-A- 5 823 680 |
| US-A- 6 155 711 | US-A1- 2003 072 352 |

EP 1 568 980 B2

## Beschreibung

Die Erfindung betrifft einen Messfühler gemäß dem Oberbegriff des Anspruchs 1. Dadurch dass die Kontaktierung außerhalb des Bereiches liegt, in dem die Temperatur erfasst werden soll, werden durch die Kontaktierung entstehende Störeinflüsse bei der Messung vermieden.

Bei üblichen Elektroherden, insbesondere mit Keramikkochfeld, sind pro Heizung ein elektromechanischer Schutztemperaturbegrenzer für die Begrenzung auf die maximale Temperatur vorhanden. Wird das Kochfeld mit einer Elektronik gesteuert, so ist eine Substitution der mechanischen Temperaturbegrenzer durch elektronische Temperaturfühler möglich, da die notwendigen Leistungsschalter (Relais) bereits vorhanden sind. Bei den verwendeten elektronischen Steuereinheiten ist häufig auch im Bereich der Elektronik eines Elektroherdes ein Messfühler angeordnet.

Für die Betriebssicherheit des Kochfeldes ist es wichtig, dass diese Messfühler kalibriert sind und so zuverlässig die Temperatur des jeweiligen Kochfeldes erfassen. Die Kalibrierung von Messfühlern erfordert jedoch einen beträchtlichen Aufwand und verursacht somit nicht unerhebliche Kosten. Beispielsweise müssen Widerstandsmessfühler in irgend einer Form getrimmt werden, wobei dieses Trimmen nicht nur zusätzliche Kosten verursacht, sondern zusätzlich die Qualität des Messfühlers beeinträchtigt sowie die Größe des Messfühlers mitbestimmt.

Ein spezifisches Anliegen dieser Erfindung ist die Ausgestaltung und Herstellung eines Widerstands-Messfühlers, wobei keine weiteren Kalibrierschritte vor dessen Einbau in das Kochfeld vorgenommen werden müssen. Widerstände, welche auf Grund ihrer definierten temperaturabhängigen elektrischen Leitfähigkeitscharakteristika zur Temperaturmessung herangezogen werden, sind hinlänglich bekannt. Die DE 3100852 berichtet von der Anwendung mäanderförmig angeordneter temperaturabhängiger Dünnschicht- bzw. Dickschicht-Widerstände zu Heiz bzw. Temperaturmesszwecken. In besonderer Ausgestaltung wird hier die Aufbringung von dünnen Pt oder Ni Bahnen auf $Al_2O_3$ vorgeschlagen. Weitere als Prior Art aufzufassende Schriften diesbezüglich sind beispielsweise die US 4371861 und die EP 0063264. Im Sinne der Anwendung ist es naheliegend, derartige Messfühler so nahe wie möglich an Teile heranzubringen, welche direkt oder indirekt beheizt werden und deren Kenntnis der Temperatur notwendig ist.

Diesen Ausführungen zugrunde liegend beschreibt die WO 03/007660 einen Aufbau eines Glaskeramikkochfeldes, dessen Temperatur mittels eines derartigen Pt-Widerstandsmessfühlers erfasst wird. Genaugenommen beansprucht diese Erfindung eine auf eine flache Keramik gedruckte Pt-Widerstandsbahn zur Temperaturerfassung welche in unmittelbarer Nähe coplanar zur beheizten Glaskeramikfläche angeordnet ist. Allerdings ist den dort angegebenen Ausführungen nicht schlüssig zu entnehmen, wie die für Kochfelder an sich geforderten Temperaturerfassungskriterien technisch, mittels angegebenen Pt-Widerstandssensor, erreicht werden.

Aus der EP 0 437 356 A geht ein Temperatursensor mit einem Metallsubstrat hervor, von dem wenigstens ein Teil mit einer Schicht aus einer Porzellanglasur überzogen ist. Über der Porzellanglasur ist weiters eine Abtastvorrichtung zum Abtasten von Temperatur über einem ersten Temperaturbereich ausgebildet, die wenigstens ein leitendes Element aufweist, das auf dem überzogenen Abschnitt des Substrats abgeschieden ist, wobei die erste Vorrichtung als eine Funktion des Widerstandes des Elementes abtastet. Das Element ist hierbei schlangenförmig angeordnet und 35 inch (etwa 90cm) lang.

Bekannt ist ferner, die Widerstandsbahn von Messfühlern mit unterschiedlichen Längen auszubilden, beispielsweise mit einer Länge im Bereich zwischen 127 mm und 889 mm (GB-A-1 415 644) oder mit einer Länge von 355 mm (GB-A-2 006 521).

Bekannt sind weiterhin Temperaturmessfühler (US-A-5,823,680) mit einer von einer temperaturabhängigen Widerstandsbahn beispielsweise aus Pt auf einem Keramikkörper gebildeten Messstruktur, die für einen äußeren elektrischen Anschluss mit ebenfalls auf dem Keramikkörper angebrachten Leiterbahnen verbunden ist, die aus dem Material der Messstruktur bestehen.

Bekannt sind schließlich Messfühler an einem Kochfeld einer Glas-Keramik-Heizplatte zur Ermittlung der Temperatur des von einer Wärmequelle erwärmten Kochfeldes mit den Merkmalen des Oberbegriffs des Patentanspruches 1 (US-A-2003/0072352).

Die Aufgabe der Erfindung besteht darin, einen kostengünstigen Messfühler anzugeben, bei dem obige Nachteile vermieden werden, die Designfreiheit eines Kochfeldes durch die geringeren Abmessungen des Temperatursensors erhöht wird, wobei eine maximale Betriebssicherheit des Keramikkochfeldes gewährleistet wird.

Erfindungsgemäß wird dies durch die Merkmale des Anspruchs 1 erreicht.

Dadurch wird der elektrische Widerstand pro Länge der Widerstandsbahn in diesem Bereich wesentlich herabgesetzt und somit der Einfluss auf die Temperaturmessung in diesem Bereich gering gehalten.

Weiters kann vorgesehen sein, dass sich der Keramikkörper zur Verbesserung der mechanischen Stabilität gegen das freie, von der Kontaktierung abgekehrte Ende hin verjüngt.

So kann bei ausreichender mechanischen Stabilität der Keramikkörper möglichst leicht und materialsparend gehalten werden, wobei weiters insbesondere am von der Kontaktierung abgekehrten Ende die Abschattung der Heizwendel durch den Keramikkörper minimal gehalten werden kann.

Insbesondere kann vorgesehen sein, dass der Keramikkörper im Bereich der Kontaktierung einen aufgeweiteten Bereich aufweist wobei der Übergang zum übrigen schmäleren Bereich des Keramikkörpers vorzugsweise konkav ausgerundet ist.

In besonderer Ausgestaltung der Erfindung kann vorgesehen sein, dass die Widerstandsbahn des Messfühlers mit einer geschlossen Passivierschicht isoliert ist. So wird die Widerstandsbahn zuverlässig vor chemischen Einflüssen geschützt und behält länger ihre thermoelektrischen Eigenschaften, sodass eine zeitliche Drift des Messbereiches minimiert wird.

Es wird auch ein nicht zur Erfindung gehörendes Verfahren zur Kalibrierung von Temperatur-Messfühlern beschrieben, in einem Heizbereich eines Keramikkochfeldes mit einer Recheneinheit, die mit den Messfühlern über elektrische Leitungen verbunden sind.

Dabei ist es eine Aufgabe, ein Verfahren anzugeben, bei dem kostengünstige, nicht kalibrierte Messfühler im eingebauten Zustand automatisch kalibriert werden, wobei eine maximale Betriebssicherheit des Keramikkochfeldes gewährleistet wird.

Dies wird dadurch erreicht, dass ein kalibrierter Standardmessfühler beliebiger Ausführung, wie z.B. ein Thermoelement, Thermistor, oder auch ein Platinwiderstandssensor mit bekanntem temperaturabhängigem Widerstand $R_S(T)$, insbesondere ein PT-100- oder PT-1000-Sensor, im Bereich der Recheneinheit vorgesehen ist, sodass im Temperaturgleichgewicht, insbesondere vor der ersten Inbetriebnahme der Heizbereiche, die Messfühler mit dem Standardmessfühler abgeglichen werden, und die entsprechenden Kalibrierwerte in einer Speichereinheit der Recheneinheit abgelegt werden. So können auch nicht kalibrierte und somit kostengünstige Messfühler im Bereich des Kochfeldes eingesetzt werden.

Insbesondere kann vorgesehen sein, dass die Messfühler als Widerstandssensoren mit jeweils einem von der Temperatur T abhängigen Widerstand $R(T)$, insbesondere Platinwiderstandssensoren, mit jeweils bekannten elektrischen Widerstandskoeffizienten und als Kalibrierwert den vorerst unbekanntem Null-Widerstand $R_0$ bei einer Standardtemperatur $T_0$, insbesondere Raumtemperatur, z.B. 25°C, ausgebildet sind, $R(T)$ bei der Temperatur $T_0$ durch die Recheneinheit bestimmt wird, und dass $R_0$ nach der Formel $R_0 = (1 + \alpha \cdot \Delta T)/R(T)$ berechnet wird, wobei $\Delta T = T - T_0$ ist, und der Wert für $R_0$ als Kalibrierwert in der Speichereinheit abgelegt wird. Das Berechnungsverfahren zur Ermittlung von $R_0$ zeichnet sich durch besondere Einfachheit aus und kann auch von einer einfachen und kostengünstigen Recheneinheit ausgeführt werden.

In Weiterführung kann vorgesehen sein, dass das Verfahren erneut, manuell oder nach einer vorgegebenen Zeitspanne automatisch, ausgelöst wird und die Kalibrierwerte in der Speichereinheit aktualisiert werden. So kann ein zeitlicher Drift der Messfühler zuverlässig ausgeglichen werden und die Genauigkeit der Messfühler auch über einen langen Zeitraum gewährleistet werden.

In Weiterbildung kann vorgesehen sein, dass die Temperaturen der Heizbereiche in vorgegebenen Zeitintervallen in der Speichereinheit abgelegt werden. So werden auch Temperaturzeitverläufe erfassbar.

In Weiterentwicklung kann vorgesehen sein, dass weitere Messfühler in Bereichen außerhalb der Heizbereiche, beispielsweise an Rückwand oder Seitenwänden eines Keramikkochfeldes oder dgl., vorgesehen sind, die in gleicher Weise kalibriert werden wie die Messfühler. So kann erfasst werden, ob Temperaturen, die für z.B. benachbarte Möbel bedenklich wären, überschritten werden.

Schließlich wird ein nicht zur Erfindung gehörendes Verfahren beschrieben zur Berechnung der Temperatur an beliebigen Stellen eines Keramikkochfeldes mit Heizbereichen, Messfühlern in diesen Heizbereichen, die kalibrierbar sind, gegebenenfalls mit weiteren Messfühlern in Bereichen außerhalb der Heizbereiche, beispielsweise an Rückwand oder Seitenwänden, die kalibrierbar sind, weiters mit einer Recheneinheit und einer Speichereinheit.

Für eine optimale Betriebssicherheit eines Keramikkochfeldes ist es von Vorteil, die aktuelle Temperatur an möglichst vielen Stellen des Keramikkochfeldes zu kennen. Andererseits ist eine hohe Anzahl von Messfühlern mit hohen Kosten und deren Einbau mit einer Einschränkung der Designfreiheit verbunden.

Eine Aufgabe besteht darin, ein Verfahren anzugeben, bei dem obige Nachteile vermieden werden, die Designfreiheit des Keramikkochfeldes erhöht wird und auch mit einer geringen Anzahl von Messfühlern kostensparend eine maximale Betriebssicherheit gewährleistet wird.

Dies wird dadurch erreicht, dass die Recheneinheit aus den aktuellen Temperaturen an den Messfühlern und den in der Speichereinheit abgelegten Kennlinienfeldern für Temperaturverläufe die aktuelle Temperatur von beliebigen Bereichen des Keramikkochfeldes außerhalb der Heizbereiche ermittelt.

So kann auch in Bereichen, in deren unmittelbarer Nähe kein Messfühler angeordnet ist, die Temperatur bestimmt und bei vergleichsweise geringer Anzahl von Messfühlern und somit relativ geringen Kosten ein höhere Betriebssicherheit erreicht werden.

Gemäß einer Weiterbildung kann vorgesehen sein, dass die Recheneinheit bei Erreichen eines vorgegebenen Temperaturgrenzwertes $T_{max}$, welcher sowohl für Heizbereiche oder jeden beliebigen Bereich außerhalb der Heizbereiche vorgegeben ist, einen Alarm, einen Schaltvorgang oder einen Regelvorgang auslöst. So wird der Nutzen der Messfühler und die Betriebssicherheit des Keramikkochfelds weiter erhöht.

Es ist somit schlüssig dargelegt und auch das Ziel, dass unter Anwendung dieses Verfahrens mit einer geringen Anzahl von Messfühlern kostensparend eine maximale Betriebssicherheit gewährleistet werden kann.

Die Erfindung wird unter Bezugnahme auf die beigeschlossenen Zeichnungen, in welchen Ausführungsformen dargestellt sind, näher beschrieben. Dabei zeigt:

    Fig.1 eine schematische Anordnung von Rechnereinheit und Messfühlern,
    Fig.2 eine Draufsicht eines Keramikkochfelds mit Heizbereichen,

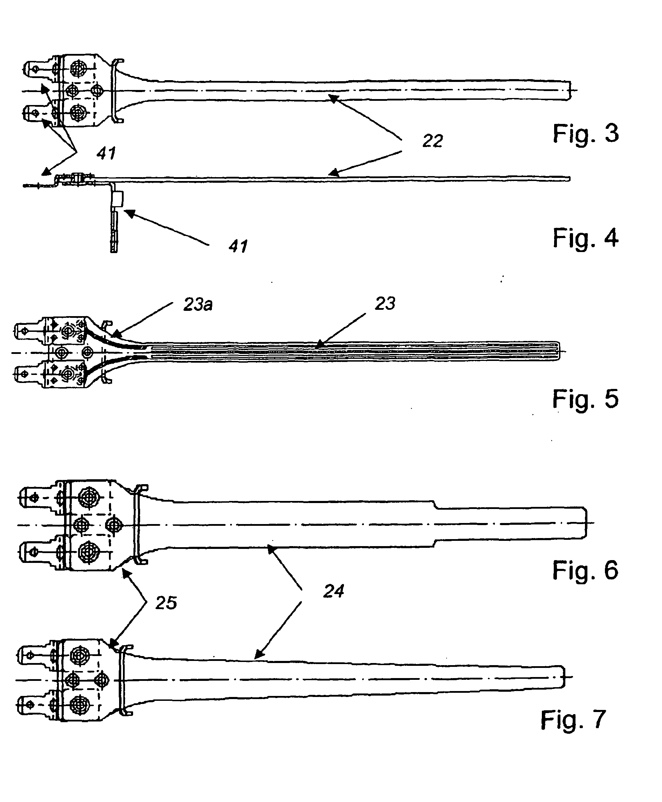

    Fig. 3 bis Fig. 7 unterschiedliche Ausformungen eines Messfühlers,

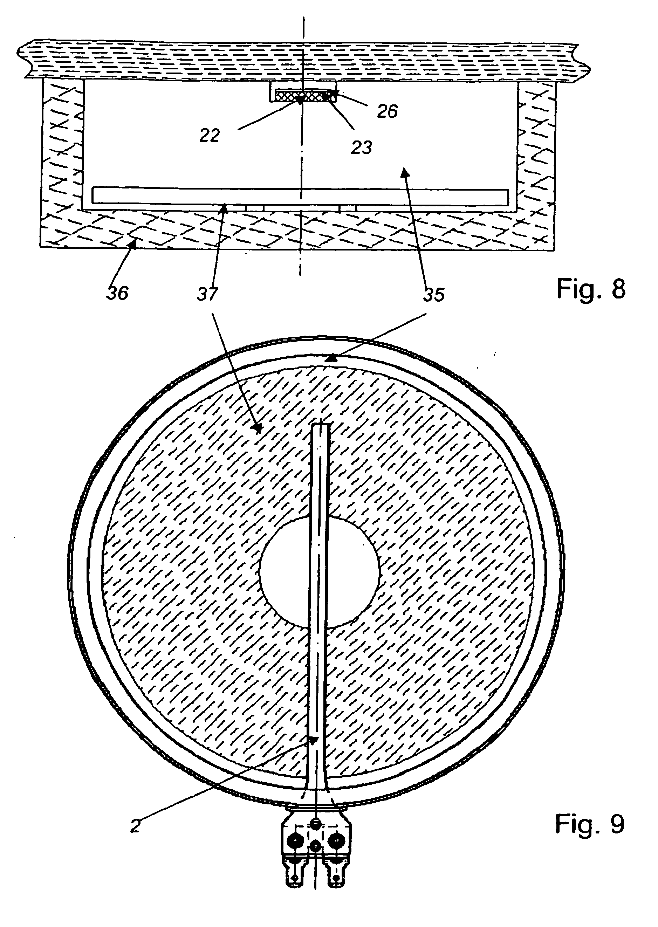

    Fig. 8 einen Schnitt durch ein Heizelement,
    Fig. 9 eine Draufsicht auf ein Heizelement, und
    Fig. 10 und Fig. 11 jeweils den Schnitt durch Kontaktierungen der Widerstandsbahn.

Widerstandssensoren sind sehr kostengünstig einsetzbar. Insbesondere Platinwiderstandssensoren zeichnen sich durch eine nur geringe zeitliche Drift aus. Das Berechnungsverfahren zur Ermittlung von $R_0$ zeichnet sich durch besondere Einfachheit aus und kann auch von einer einfachen und daher kostengünstigen Recheneinheit ausgeführt werden.

In weiterer Ausgestaltung der Erfindung ist es vorteilhaft, auch im Hinblick auf kompakte Konstruktion des gesamten Kochfeldes 33, den/die Messfühler 2 im Bereich des Kochfeldes 33 nach dem temperaturabhängigen Widerstandsprinzip zu gestalten. Bauartgemäß handelt es sich hierbei um auf Keramik, vorzugsweise auf $Al_2O_3$, gedruckte Pt-Dickschichtwiderstandsbahnen, welche derart angeordnet sind, dass die beiden notwendigen elektrischen Kontakte an der gleichen Seite des Keramiksubstrats angeordnet sind.

Anstelle von Pt können auch andere Metalle, Übergangsmetalle und deren Legierungen, welche hinreichend thermooxidationsbeständig sind, als in Form einer Dickschichtswiderstandsbahn zu hier angesprochenen Sensorzwecken verwendet werden.

Ohne auf eine Theorie festgelegt zu sein, haben empirische Versuche gezeigt, dass die Länge der gedruckten Pt-Widerstandsbahn 23, wobei die mit Siebdruck erreichbare Dickschicht nach dem Einbrennen 50 $\mu$m nicht übersteigt, für praktische Temperaturmessgenauigkeiten in Glaskeramikkochfeldern 33 signifikant von deren Länge abhängt. Dem folgend wird zwingend vorgeschlagen die Bahnlänge mindestens 200 mm zu wählen. Je nach Messgenauigkeitsanforderung sind erfindungsgemäß weitere Bahnlängen von 250 mm bis 2000 mm und in noch näher definierter Ausgestaltung 320 mm bis 1000 mm anzuwenden.

Um diese Länge auf der Sensorzunge aufbringen zu können, ist es notwendig, diese mäanderförmig darauf anzuordnen.

Die maximale Länge der Sensorzunge ist, wie unschwer zu verstehen, durch den Durchmesser des zu überwachenden Kochfeldes 3 gegeben. Unter Sensorzunge sei die die Widerstandsleiterbahn tragende Keramikkörper 22 welche in das Kochfeld hineinreicht, zu verstehen. Eine bevorzugte Ausführung sieht eine Sensorzungenlänge von max. 3/4 des Kochfelddurchmessers vor. Als weitere erfindungsgemäß bevorzugte Längen sind Abmessungen angegeben, welche von einem Fünftel bis zur Hälfte des Kochfelddurchmessers reichen.

Die Stegbreite der gedruckten Widerstandsbahnen 23 ist je nach Bahnlänge und Größe des zu überwachenden Kochfeldes 3 zu wählen. Im Regelfall wird eine Stegbreite zwischen 0.01 und 1 mm erfindungsgemäß als Vorteilhaft erachtet. Eine weiters bevorzugte Ausführung sieht Stegbreiten zwischen 0.1 und 0.5 mm vor, was erfindungsgemäß bevorzugt mittels Siebdruck-Technik bewerkstelligt wird. Mittels Siebdruck aufgebrachte Bahnen haben ausreichende Genauigkeit bezüglich Höhe und Breite, was wiederum für den gewünschten Sensorwiderstand von Bedeutung ist. Grundsätzlich jedoch ist jede physikalische Beschichtungsmethode, wie auch z. B. Sputtern geeignet solche elektrisch leitenden Bahnen auf ein Substrat aufzubringen.

Ein unter Betriebsbedingungen wesentliches Merkmal der gedruckten und eingebrannten Widerstandsbahn stellt der stärker ausgeprägte Abschnitt (23a) der zu den elektrischen Kontakten hinweist dar. Dieser wesentlich dicker aufgebrachte Abschnitt vermag thermomechanische Spannungen, welche durch das Temperaturgefälle zwischen dem Inneren und dem Äußeren des Kochfeldes unter Betriebsbedingungen hervorgerufen werden, soweit aufzunehmen, sodass ein Bruch der gedruckten Leiterbahn in diesem Bereich vermieden wird.

Ein weiterer dadurch erzielter maßgeblicher Effekt, welcher der Genauigkeit des Sensors zuträglich ist, ist die damit verbundene Herabsetzung des elektrischen Widerstandes im selbigen Zuleitungsbereich, welcher naturgemäß mitunter vom Querschnitt abhängig ist.

Anders ausgedrückt ist $R_{Zuleitung}$ damit sehr viel kleiner als $R_{Widerstandbahn}$. Damit ergibt sich, dass der vom temperaturabhängigen Widerstandssensor ermittelte Temperaturwert genauer und von allfälligen Temperaturschwankungen im Kontaktierungsbereich nicht, bzw. nur in vernachlässigbar kleinem Ausmaß beeinflusst wird.

Das die Widerstandsbahn tragende Material ist bevorzugt aus Keramik, und in weiters bevorzugter Form aus $Al_2O_3$, gefertigt, wobei der Keramikträger erfindungsgemäß verjüngt ausgeführt ist. Diese Verjüngung, welche konkave Verbreiterung zur Sensorkontaktierung hin zu sehen ist (6), zeichnet soweit zur mechanischen Stabilität des Sensors verantwortlich, sodass auf Stützstege und/oder andere konstruktiv sichtbare Verstärkungen verzichtet werden kann.

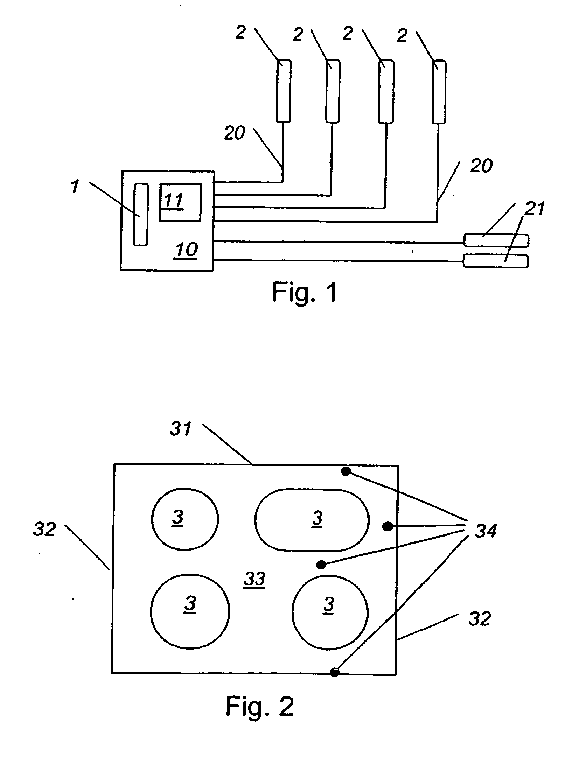

Je nach beabsichtigter Sensorgröße und aufzubringender Sensorbahnlänge kann das Substrat in verschiedener Art und Weise verjüngend bevorzugt ausgeführt sein. Fig. 1 und 2 zeigt gleichbleibenden Durchmesser der Sensorzunge nach der Verjüngung. Fig. 2 zeigt aufeinander folgende Verjüngungen der Sensorzunge, welche in beliebiger Anzahl aufeinanderfolgend angeordnet sein können.

Die erfindungsgemäße Formgebung kann sowohl schon im pulvermetallurgisch bedingten Herstellungsprozess erfolgen als auch zu einem späteren Zeitpunkt, wobei aus Keramikplatten mittels Laser die gewünschten Formteile ausgeschnitten werden, welche anschließend einer thermischen Behandlung unterworfen werden. Das bedeutet, dass der Keramikformteil einem Nachsinterprozess zugeführt wird. Nach einem genau definierten Temperaturprogramm werden die ausgeschnittenen Formteile auf Temperaturen bis zu 1600°C geglüht und anschliessend langsam abgekühlt. Dies hat zur Folge, dass das Keramikmaterial unter thermozyklischen Bedingungen, wie sie in einem Kochfeld 3 gegeben sind, keine Risse ausbildet bzw. sich nicht in ungewünschter Weise nachträglich verformt.

Vorzugsweise wird dieser Temperatubehandlungsschritt mit dem Einbrennen der aufgedruckten Widerstandsbahn 23 kombiniert.

Zusätzlich wird erfindungsgemäß bevorzugt, zum Schutz und gegebenenfalls zur Isolierung der Widerstandsbahn 23, über selbige eine Glas oder Glaskeramikschicht aufgebracht. Die Aufbringung erfolgt wiederum mittels Siebdruck-Technik. Diese schützende, isolierende Isolierschicht 26 wird anschließend durch Einbrennen, bei oder knapp unter der Schmelztemperatur der angewendeten Glas oder Keramikfritte auf dem die Widerstandsbahn 23 tragenden Substrat fixiert.

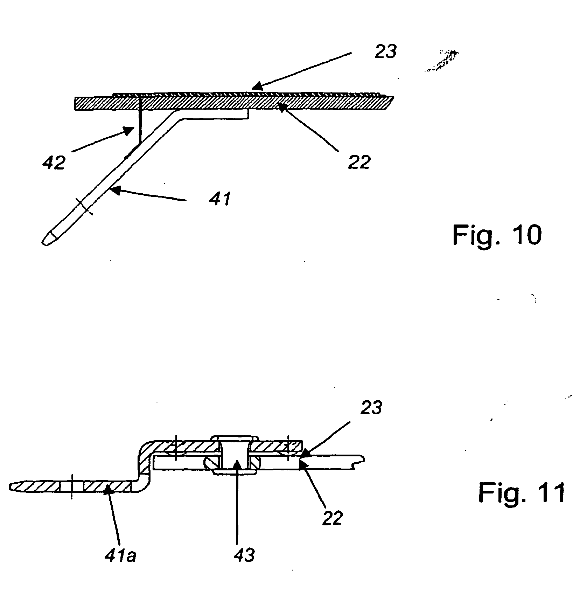

Elektrischer Kontakt zwischen der Kontaktierung 41 und der Widerstandsbahn 23 kann über ein Metallband 42 erfolgen, dass von der Kontaktierung 41 über einen Schlitz im Keramikkörper 22 mit der Widerstandsbahn 23 verbunden ist (siehe Fig. 10).

Auch kann eine federnde Kontaktierung 41 a über eine Niete 43 mit dem Keramikkörper 22 verbunden sein, wobei die Widerstandbahn 23 dann zwischen die federnde Kontaktierung 41a und den Keramikkörper 22 geklemmt ist.

Fig.2 zeigt ein Keramikkochfeld 33 mit Heizbereichen 3. Die Anzahl, Form und Anordnung der Heizbereiche 3 auf einem Kochfeld kann hierbei beliebig variieren. Jedem Heizbereich ist ein Messfühler 2 zugeordnet (in Fig. 2 nicht dargestellt), die schematisch in Fig. 1 abgebildet sind. Die Messfühler 2 sind über Leitungen 20 mit einer Recheneinheit 10 elektrisch verbunden. Die Messfühler 2 sind vorerst nicht kalibriert und können beispielsweise als Widerstandssensoren ausgebildet sein.

Im Bereich der Recheneinheit 10 ist weiters ein Standardmessfühler 1 angeordnet, beispielsweise ein Platinwiderstandssensor mit bekanntem temperaturabhängigem Widerstand Rs(T), insbesondere ein PT-100- oder PT-1000-Sensor. In Zusammenwirkung mit der Recheneinheit 10 liefert der Standardmessfühler 1 den jeweils aktuellen Temperaturwert im Bereich der Recheneinheit 10.

Weitere Messfühler 21 können auch in Bereichen 34 außerhalb der Heizbereiche 3 angeordnet sein.

Die Kalibrierung der einzelnen Sensoren erfolgt dabei in der Art, dass in einem ersten Schritt die Temperatur in der im thermischen Gleichgewicht befindlichen Kochmulde mit Hilfe des kalibrierten Messfühlers gemessen wird. In einem weiteren Schritt werden nun die zu dieser Temperatur zugehörigen Widerstände der nicht kalibrierten Sensoren gemessen. Aus dieser Information kann dann auf einfache Weise ein Kalibierfaktor bzw. der Widerstand der Sensoren bei definierten Temperatur, vorzugsweise 25°C, ermittelt und anschließend gespeichert werden.

Die Messfühler 2 sind Widerstandssensoren, insbesondere Platinwiderstandssensoren, welche einen von der jeweiligen Temperatur T abhängigen Widerstand R(T) mit jeweils bekannten elektrischen Widerstandskoeffizienten haben. Als Kalibrierwert den vorerst unbekanntem Null-Widerstand R0 bei einer Standardtemperatur T0, insbesondere Raumtemperatur, z.B. 25°C, ausgebildet sind, R(T) bei der Temperatur T0 durch die Recheneinheit (10) bestimmt wird, und dass R0 nach der Formel R0 = (1 + $\alpha \cdot \Delta$T)/R(T) berechnet wird, wobei $\Delta$T = T - T0 ist, und der Wert für R0 als Kalibrierwert in der Speichereinheit (11) abgelegt wird.

Eine Kalibrierung der Messfühler 2 erfolgt im Temperaturgleichgewicht, insbesondere vor der ersten Inbetriebnahme der Heizbereiche 3, also im Wesentlichen bei Raumtemperatur, weil dann die Temperatur an den Messfühlern 2 naturgemäß gleich jener am Standardmessfühler 1 ist. Entsprechende Kalibrierwerte für die Messfühler 2 werden vorteilhafter Weise in einer Speichereinheit 11 der Recheneinheit 10 abgelegt.

Wenn die Messfühler 2 als Widerstandssensoren ausgebildet sind, verhält sich ihr temperaturabhängiger Widerstand R(T) gemäß

$$R(T) = R_0 \times \left(1 + \alpha \times \Delta T + \beta \times (\Delta T)^2\right)$$

oder vereinfacht

$$R(T) = R_0 \times \left(1 + \alpha \times \Delta T\right)$$

mit jeweils einem bekannten elektrischen Widerstandskoeffizienten $\alpha$ bzw. $\beta$ und vorerst unbekanntem Null-Widerstand $R_0$ bei einer Standardtemperatur $T_0$, insbesondere bei Raumtemperatur, z.B. 25°C, wobei $\Delta T = T - T_0$ ist. Zur Kalibrierung der Messfühler 2 bzw. der weiteren Messfühler 21 ist daher die Bestimmung von $R_0$ als Kalibrierwert erforderlich.

Gegenständliches Verfahren wird im Temperaturgleichgewicht, vorzugsweise vor der ersten Inbetriebnahme der Heizbereiche 3, durchgeführt, weil nur im Temperaturgleichgewicht davon ausgegangen werden kann, dass alle Messfühler 2, 21 und der Standardmessfühler 1 die gleiche Temperatur aufweisen.

Um ein Driften der Messfühler 2, 21 zu vermeiden und auch nach längerer Zeit die Genauigkeit derselben gewährleisten zu können, kann auch zu einem späteren Zeitpunkt das Verfahren zur Kalibrierung von Messfühlern 2, 21 ausgeführt werden, sodass die Kalibrierwerte aktualisiert und in der Speichereinheit 11 abgelegt werden. Diese erneute Kalibrierung kann händisch ausgelöst werden, oder nach einer vorgegebenen Zeitspanne, insbesondere nach einer für ein Temperaturgleichgewicht notwendigen Mindestdauer nach der letzten Inbetriebnahme der Heizbereiche 3, automatisch gestartet werden.

Weiters können zur Ermittlung der Temperaturen beispielsweise in Heizbereichen 3 auch bekannte Temperaturverläufe nutzbar gemacht werden. So Gibt es beispielsweise charakteristische Temperaturverläufe bei der Abkühlung eines Heizbereichs 3 nach dessen Abschaltung. Weiters wird aber auch die Temperatur eines Messfühlers 2 eines Heizbereichs 3, der nicht in Betrieb ist, nach einem charakteristischen Verlauf zunehmen, wenn benachbarte Heizbereiche 3 in Betrieb sind. Weitere charakteristische Temperaturverläufe in Abhängigkeit vom Betriebszustand benachbarter Heizbereiche 3 können auch von weiteren Messfühlern 21 außerhalb von Heizbereichen 3 registriert werden. Solche charakteristischen Temperaturverläufe in Abhängigkeit von Ort, Betriebszustand benachbarter Heizbereiche 3 und Zeit können als sogenannte Kennlinienfelder beschrieben und in der Speichereinheit 11 abgelegt werden. Bei Kenntnis der entsprechenden Wärmeübertragungseigenschaften in einem Keramikkochfeld 33 und den entsprechenden Kennlinienfelder kann daher durch die Recheneinheit 10 die Temperatur in beliebigen Bereichen 34, beispielsweise an Rückwand 31 oder Seitenwänden 32 aus den Temperaturen an Messfühlern 2, 21 in definierten Abständen ermittelt werden.

Nun kann zur Erhöhung der Betriebssicherheit für verschiedenen Bereiche 34 außerhalb der Heizbereiche, aber auch für Heizbereich 3 selbst, ein Grenzwert $T_{max}$ vorgegeben sein, bei dessen Erreichung ein Vorgang, wie beispielsweise ein Alarm, ein Schaltvorgang oder ein

Regelvorgang, ausgelöst wird. So kann beispielsweise gewährleistet werden, dass sicherheitsbedenkliche Temperaturen in bestimmten Bereichen vermieden werden.

Für eine optimale Betriebssicherheit eines Keramikkochfeldes ist es von Vorteil, die aktuelle Temperatur an möglichst vielen Stellen des Keramikkochfeldes zu kennen. Die Kalibrierung der einzelnen Sensoren erfolgt dabei in der Art, dass in einem ersten Schritt die Temperatur in der im thermischen Gleichgewicht befindlichen Kochmulde mit Hilfe des kalibrierten Messfühlers gemessen wird. In einem weiteren Schritt werden nun die zu dieser Temperatur zugehörigen Widerstände der nicht kalibrierten Sensoren gemessen. Aus dieser Information kann dann auf einfache Weise ein Kalibrierfaktor bzw. der Widerstand der Sensoren bei definierten Temperatur, vorzugsweise 25°C, ermittelt und anschließend gespeichert werden.

**Patentansprüche**

1. Messfühler (2) zur Ermittlung des Mittelwerts der Temperatur eines von einer Wärmequelle erwärmten Heizbereichs (3) einer Glas-Keramik-Heizplatte, wobei der Messfühler (2) zwischen der Wärmequelle und der Glas-Keramik-Heizplatte und parallel zu dieser anordenbar, wobei der Messfühler (2) einen Keramikkörper (22) und eine auf dem Keramikkörper (22) angebrachte temperaturabhängige Widerstandsbahn (23) umfasst, die von dem Heizbereich (3) anordenbar ist, wobei die Widerstandsbahn (23) außerhalb des Bereichs, in dem die Temperatur erfasst werden soll, mit Kontaktierungsflächen einer äußeren elektrischen Kontaktierung (41 a) leitend verbunden ist,
**dadurch gekennzeichnet,**
**dass** die Länge der Widerstandsbahn (23) mindestens 200 mm beträgt,
**dass** die Widerstandsbahn (23) in einem von der elektrischen Kontaktierung (41 a) deutlich unterscheidbaren Bereich (23a) der Widerstandsbahn zwischen der Kontaktierung (41 a) und einem für die Erfassung der Temperatur bestimmten temperatursensitiven Bereich der Widerstandsbahn (23) mit größerem, insbesondere mit mindestens doppeltem Querschnitt ausgebildet ist, im Vergleich zum Querschnitt im temperatursensitiven Bereich, und
**dass** zur Kontaktierung (41 a) der Widerstandsbahn (23) Kontaktierungsstücke aus elastisch federnden Material vorgesehen sind, die mit dem Keramikkörper (22) vernietet und mit der Widerstandsbahn (23) zugekehrten Ausdellungen versehen sind, sodass die Widerstandsbahn (23) an ihren Bereichen (23a) mit dem größeren Querschnitt jeweils zwischen der Kontaktierung (41 a) und dem Keramikkörper (22) geklemmt ist.

2. Messfühler nach Anspruch 1, **dadurch gekennzeichnet, dass** sich der Keramikkörper (22) zur Verbesserung der mechanischen Stabilität gegen sein freies, von der Kontaktierung (41 a) abgekehrtes Ende hin verjüngt.

3. Messfühler nach Anspruch 1 oder 2, **dadurch gekennzeichnet, dass** der Keramikkörper (22) im Bereich der Kontaktierung (41 a) einen aufgeweiteten Bereich aufweist, wobei der Übergang zum übrigen, schmäleren Bereich des Keramikkörpers (22) vorzugsweise konkav ausgerundet ist.

4. Messfühler nach einem der Ansprüche 1 - 3, **dadurch gekennzeichnet, dass** die Widerstandsbahn (23) des Messfühlers (2) mit einer geschlossenen Passivierschicht (26) isoliert ist.

**Claims**

1. Sensor (2) for determining the mean value of the temperature of a heated area (3) of a glass-ceramic hot plate heated by a heat source, wherein the sensor (2) can be mounted between the heat source and the glass-ceramic hot plate and parallel to same, wherein the sensor (2) comprises a ceramic body (22) and a temperature-dependent resistance sheet (23) which is placed on the ceramic body (22) and which can be arranged away from the heated area (3), wherein the resistance sheet (23) is in conductive connection outside of the area in which the temperature is to be determined, to the contacting faces of an external electric contactor (41a) **characterised in that** the length of the resistance sheet (23) amounts to at least 200 mm, that the resistance sheet (23) is formed in an area (23a) of the resistance sheet, which is clearly distinguishable from the electric contactor (41a) between the contactor (41a) and a temperature-sensitive area of the resistance sheet (23) intended for determining the temperature, with a larger more particularly with at least double the cross-sectional size, compared with the cross-sectional size in the temperature-sensitive area, and that for a contactor (41a) of the resistance sheet (23) contacting members of an elastically resistant material are provided which are riveted to the ceramic body (22) and are provided with surface dents facing the resistance sheet (23) so that the resistance sheet (23) is clamped at its areas (23a) with the larger cross-section each between the contact (41a) and the ceramic body (22).

2. Sensor according to claim 1 **characterised in that** the ceramic body (22) tapers towards its free end remote from the contactor (41a) in order to improve the mechanical stability.

3. Sensor according to claim 1 or 2 **characterised in that** the ceramic body (22) has in the region of the contactor (41a) a widened area wherein the transition to the remaining narrower area of the ceramic body (22) is preferably rounded concave.

4. Sensor according to one of claims 1 to 3 **characterised in that** the resistance sheet (23) of the sensor (2) is insulated with a closed passivation coating (26).

**Revendications**

1. Capteur (2) destiné à déterminer la valeur moyenne de la température d'une surface de chauffe (3) d'une plaque vitrocéramique chauffée par une source de chaleur, le capteur (2) pouvant venir se disposer entre la source de chaleur et la plaque vitrocéramique, le capteur (2) comprenant un corps en céramique (22) et une bande résistive (23) dépendant de la température, appliquée sur le corps en céramique (22), qui peut venir se disposer à distance de la surface de chauffe (3), la bande résistive (23) étant reliée par conduction, à l'extérieur de la zone dans laquelle la température doit être enregistrée, avec des surfaces de connexion d'une connexion électrique externe (41a), **caractérisé en ce que** la longueur de la bande résistive (23) s'élève à au moins 200 mm, **en ce que** la bande résistive (23) est réalisée, dans une zone (23a), qui peut être séparée clairement de la connexion électrique (41a), de la bande résistive entre la connexion électrique (41a) et une zone de la bande résistive (23) sensible à la température, destinée à l'enregistrement de la température, avec une section transversale supérieure, en particulier avec une section transversale au moins doublée, et **en ce qu'**on prévoit, pour la connexion (41a) de la bande résistive (23), des éléments de connexion constitués d'une matière possédant une élasticité analogue à celle d'un ressort, qui sont rivetés au corps en céramique (22) et qui sont munis d'évidements tournés vers un bande résistive (23), si bien que la bande résistive (23) est serrée, dans ses zones (23a) de section transversale supérieure, respectivement entre la connexion (41a) et le corps en céramique (22).

2. Capteur selon la revendication 1, **caractérisé en ce que** le corps en céramique (22), pour améliorer la stabilité mécanique, manifeste un rétrécissement dans la zone de son extrémité qui se détourne de la connexion (41 a).

3. Capteur selon la revendication 1 ou 2, **caractérisé en ce que** le corps en céramique (22) présente, dans la zone de la connexion (41a), une zone élargie, la transition avec la zone restante plus étroite du corps en céramique (22) présentant de préférence une concavité.

4. Capteur selon l'une quelconque des revendications 1 à 3, **caractérisé en ce que** la bande résistive (23) du capteur (2) est isolée avec une couche de passivation fermée (26).

Fig. 1

Fig. 2

**Fig. 3**

**22**

**41**

**22**

**Fig. 4**

**41**

**23a**

**23**

**Fig. 5**

**Fig. 6**

**24**

**25**

**24**

**Fig. 7**

26

22

23

36        37                    35        **Fig. 8**

2                                **Fig. 9**

23

42

41

22

Fig. 10

23

41a

43

22

Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3100852
- US 4371861 A
- EP 0063264 A
- WO 03007660 A
- EP 0437356 A
- GB 1415644 A
- GB 2006521 A
- US 5823680 A
- US 20030072352 A